(19) Europäisches Patentamt
European Patent Office
Office européen des brevets

(11) **EP 4 447 071 A1**

(12) **EUROPEAN PATENT APPLICATION**
published in accordance with Art. 153(4) EPC

(43) Date of publication:
**16.10.2024 Bulletin 2024/42**

(21) Application number: **22904208.0**

(22) Date of filing: **06.12.2022**

(51) International Patent Classification (IPC):
***G21F 9/12*** *(2006.01)*

(52) Cooperative Patent Classification (CPC):
**B01J 20/10; B01J 20/28; B01J 20/30; C01B 39/08;
C02F 1/28; G21F 9/12**

(86) International application number:
**PCT/JP2022/044835**

(87) International publication number:
**WO 2023/106280 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2021 JP 2021199157**

(71) Applicant: **Tosoh Corporation
Yamaguchi 746-8501 (JP)**

(72) Inventors:
• **TSUCHIYA, Kazuyoshi
Shunan-shi Yamaguchi 746-8501 (JP)**
• **SHIRAKURA, Yoshinori
Shunan-shi Yamaguchi 746-8501 (JP)**

(74) Representative: **TBK
Bavariaring 4-6
80336 München (DE)**

(54) **COMPOSITION AND METHOD FOR PRODUCING SAME**

(57)     Provided are at least one of a composition including silver and crystalline silicotitanate to which cesium and strontium ions can be adsorbed as in the related art and to which an iodide ion can also be adsorbed simultaneously and a method for producing the composition.

EP 4 447 071 A1

**Description**

TECHNICAL FIELD

The present disclosure relates to a composition and a method for producing the composition and specifically to a composition including crystalline silicotitanate. The composition according to the present disclosure is suitably used for, for example, treating hazardous ions included in polluted water, seawater, groundwater or the like.

BACKGROUND ART

Crystalline silicotitanate is known as an adsorbent with which hazardous ions can be removed from an aqueous solution.

For example, PTL 1 discloses crystalline silicotitanate used as an ion exchanger for removing radioactive substances included in seawater and a method for producing the crystalline silicotitanate. PTL 1 discloses crystalline silicotitanate containing niobium. This crystalline silicotitanate is intended to remove radiocesium and radiostrontium by adsorption. Silver-containing zeolite intended to remove iodine, which is another radionuclide, by adsorption is also known. However, a material capable of simultaneous adsorption of the above substances is not known.

PTL 2 discloses crystalline silicotitanate salt CST-2 used as an adsorbent for aqueous solutions containing only cesium.

PTL 3 discloses silicotitanic acid used as an adsorbent for aqueous solutions containing cesium and strontium.

PTL 4 discloses a crystalline silicotitanate composition having a sitinakite structure which is used as an adsorbent for aqueous solutions containing cesium and strontium and particularly has high selectivity for strontium.

PRIOR ART DOCUMENTS

PATENT DOCUMENTS

| | |
|---|---|
| Patent Document 1: | US-A-6110378 |
| Patent Document 2: | JP-B-4919528 |
| Patent Document 3: | JP-A-2013-088391 |
| Patent Document 4: | JP-B-6645203 |

DISCLOSURE OF INVENTION

TECHNICAL PROBLEM

The present disclosure provides at least one of a composition including silver and crystalline silicotitanate to which cesium and strontium ions can be adsorbed as in the related art and to which an iodide ion can also be adsorbed simultaneously and a method for producing the composition.

SOLUTION TO PROBLEM

The inventors of the present invention found that a composition that includes silver and crystalline silicotitanate is capable of simultaneous adsorption of cesium, strontium and iodide ions.

Specifically, the present invention is as described in claims below, and the summary of the present disclosure is as follows.

[1] A composition comprising silver and crystalline silicotitanate.
[2] The composition according to [1], wherein the crystalline silicotitanate has a sitinakite structure.
[3] The composition according to [1] or [2], wherein a content of the silver is 0.3% by mass or more and 20% by mass or less.
[4] The composition according to any one of [1] to [3], wherein at least part of the silver is present in an ion-exchange site of the crystalline silicotitanate.
[5] The composition according to any one of [1] to [4], comprising one or more metal elements selected from the group consisting of niobium, tantalum, vanadium, antimony, manganese and iron.

[6] The composition according to [5], wherein the metal elements include niobium.

[7] The composition according to [5] or [6], wherein a molar ratio of a content of the metal elements to a content of titanium included in the composition is 0.01 or more and 1.2 or less.

[8] The composition according to any one of [1] to [7], wherein a distribution coefficient of iodine is 10,000 mL/g or more, the distribution coefficient of iodine being represented by Formula (1) below.

$$Kd = (C_0 - C)/C \times V/m \qquad (1)$$

where

Kd: a distribution coefficient of iodine [mL/g],
$C_0 = 1$: a concentration of a metal ion in an aqueous solution containing iodine prior to an adsorption treatment [ppm],
C: a concentration of the metal ion in the aqueous solution containing iodine at adsorption equilibrium [ppm],
$V = 1000$: a volume of the aqueous solution containing iodine [mL],
$m = 0.05$: a mass of an adsorbent [g]

[9] A method for producing the composition according to any one of [1] to [8], the method comprising bringing crystalline silicotitanate into contact with an aqueous solution containing silver.

[10] A molded body comprising the composition according to any one of [1] to [8].

[11] An adsorbent for cesium, strontium and iodide ions, the adsorbent comprising the composition according to any one of [1] to [8].

[12] An adsorbent for one or more selected from the group consisting of cesium, strontium and iodide ions, the adsorbent comprising the composition according to any one of [1] to [8].

[13] A method for adsorbing cesium, strontium and iodide ions, the method comprising bringing the adsorbent according to [11] or [12] into contact with an aqueous solution containing cesium, strontium and iodide ions.

[14] The method for adsorbing cesium, strontium and iodide ions according to [13], wherein the aqueous solution has a pH of 2 or more and 12 or less.

[15] The method for adsorbing cesium, strontium and iodide ions according to [13] or [14], the method comprising a step of performing a reduction treatment of the aqueous solution.

[16] The method for adsorbing cesium, strontium and iodide ions according to [15], wherein a reductant used in the reduction treatment includes one or more selected from the group consisting of an oxalate salt, a formate salt, an erythorbate salt, an ascorbate salt and a hydrazine salt.

ADVANTAGEOUS EFFECTS OF INVENTION

According to the present disclosure, at least one of a composition including silver and crystalline silicotitanate to which cesium and strontium ions can be adsorbed as in the related art and to which an iodide ion can also be adsorbed simultaneously and a method for producing the composition can be provided.

BRIEF DESCRIPTION OF DRAWINGS

[Fig. 1] A diagram illustrating the results of a column flow evaluation conducted in Example 5.
[Fig. 2] A diagram illustrating the results of a column flow evaluation conducted in Comparative Example 1.
[Fig. 3] A diagram illustrating the results of a column flow evaluation conducted in Comparative Example 2.
[Fig. 4] A diagram illustrating an XRD pattern determined in Example 1.
[Fig. 5] A diagram illustrating an XRD pattern determined in Comparative Example 3.
[Fig. 6] A diagram illustrating an XRD pattern determined in Comparative Example 4.

DESCRIPTION OF EMBODIMENTS

The present disclosure is described with reference to an exemplary embodiment below. The terms used in this embodiment are as follows.

The term "silicotitanate" refers to a complex oxide having a structure consisting of repeated networks including titanium (Ti) and silicon (Si) atoms and oxygen (O) atoms with which Ti and Si atoms are bonded to each other. Silicotitanate is represented by, for example, General Formula: $A_2Ti_2O_3 \cdot xSiO_4 \cdot nH_2O$ (where A represents at least one alkali metal element selected from sodium (Na) and potassium (K)). When an X-ray powder diffraction (hereinafter, also referred to as "XRD") pattern of a silicotitanate material has a crystalline XRD peak, the silicotitanate material is referred to as "crystalline silicotitanate".

On the other hand, a silicotitanate material that does not have a crystalline XRD peak is referred to as "amorphous silicotitanate".

In this embodiment, the XRD pattern is determined by, for example, performing XRD measurement under the following conditions.

Acceleration current and voltage: 40 mA and 40 kV
Radiation source: CuK$\alpha$ radiation (wavelength $\lambda$: 1.5405 Å)
Measurement mode: continuous scanning
Scanning conditions: 40°/min
Measurement range: 2$\theta$ = 3° to 43°
Detector: semiconductor detector

The crystalline XRD peak is a peak such that the 2$\theta$ value of the peak top can be identified and detected in an XRD pattern analysis performed using common analysis software (e.g., SmartLab Studio II, produced by Rigaku Corporation) and is, for example, an XRD peak having a half-width 2$\theta$ of 1.0° or less.

In this embodiment, a cesium ion, a strontium ion and an iodide ion may include radiocesium, radiostrontium and radioiodine, respectively, and may be radiocesium, radiostrontium and radioiodine, respectively.

The term "simultaneous adsorption" refers to a process in which two or more types of target ions are removed from a medium including the target ions by adsorption in a single step (i.e., "single-stage process"), instead of conducting a plurality of steps for successively removing each of the ions from the medium by adsorption (i.e., "multistage process"). For example, in simultaneous adsorption of cesium, strontium and iodide ions, an adsorbent is brought into contact with a solution including cesium, strontium and iodide ions such that the cesium, strontium and iodide ions are adsorbed thereto. Simultaneous adsorption is a process in which two or more types of target ions are adsorbed in a single adsorption step.

A composition according to this embodiment is described below.

The composition according to this embodiment is a composition that includes silver and crystalline silicotitanate and may be a composition composed of silver and crystalline silicotitanate. This enables simultaneous adsorption of cesium, strontium and iodide ions with selectivity compared with other ions.

The crystalline silicotitanate included in the composition according to this embodiment preferably has a sitinakite structure in order to further enhance the property of adsorbing strontium and cesium ions.

Note that the term "sitinakite structure" refers to a crystal structure identified by the X-ray powder diffraction peaks described as sitinakite in American Mineralogist Crystal Structure Database (http://ruff.geo.arizona.edu./AMS/amcsd.php, searched on 11th November, 2021). The crystalline silicotitanate is identified to have a sitinakite structure when X-ray diffraction peaks occur at, at least, 2$\theta$ = 11.23° $\pm$ 0.5°, 27.52° $\pm$ 0.5°, 14.82° $\pm$ 0.5° and 26.37° $\pm$ 0.5° in an XRD pattern determined using CuK$\alpha$ radiation (wavelength $\lambda$: 1.5405 Å) as a radiation source.

The composition according to this embodiment includes silver (Ag) in order to adsorb an iodide ion.

The silver content in the composition according to this embodiment may be 0.3% by mass or more, 0.4% by mass or more or 1.5% by mass or more and may be 20% by mass or less, 10% by mass or less or 5% by mass or less of the mass of the crystalline silicotitanate. The above silver content is, for example, 0.3% by mass or more and 20% by mass or less, 0.4% by mass or more and 10% by mass or less, 0.5% by mass or more and 10% by mass or less, 1.5% by mass or more and 10% by mass or less or 1.5% by mass or more and 5% by mass or less.

The term "silver content" refers to the mass proportion [mass%] of silver, which can be determined by ICP emission spectrometry using a common ICP-AES system (e.g., name: OPTIMA 3000 DV, produced by PERKIN-ELMER).

The molar ratio of the silver content to the titanium content in the composition according to this embodiment (hereinafter, this molar ratio is also referred to as "Ag/Ti ratio") may be, for example, 0.005 or more, 0.01 or more or 0.5 or more, and may be 0.6 or less, 0.3 or less or 0.2 or less. The Ag/Ti ratio is preferably 0.005 or more and 0.6 or less, is more preferably 0.006 or more and 0.6 or less, is further preferably 0.01 or more and 0.3 or less, and is still further preferably 0.05 or more and 0.25 or less.

In order to produce a high capability to adsorb an iodide ion, it is preferable that the crystalline silicotitanate included in the composition according to this embodiment include silver. It is more preferable that at least part of the silver be supported on the crystalline silicotitanate.

Note that the expression "include silver" means that the crystalline silicotitanate contains silver, while the expression "silver be supported on" means that the crystalline silicotitanate includes a silver atom other than a skeletal atom (hereinafter, also referred to as "T atom"). That is, the above expression means that silver atoms are not T atoms and preferably means that silver atoms are not T atoms and are included in at least one of the surface and pores of the crystalline silicotitanate. In the case where silver is included in the surface of the crystalline silicotitanate, the silver may be in the form of an oxide, such as silver oxide, and may be in the form of an insoluble salt, such as silver chloride. Silver may be included in the surface of the crystalline silicotitanate in the form of an oxide. In the case where silver is included in the pores, the silver may be in the form of a silver ion ion-exchanged with the sodium ion included in the crystalline silicotitanate, which is an ion-exchangeable cation. Silver may be included in the pores in the form of a silver ion.

It is preferable that the silver included in the composition according to this embodiment be at least in the form of a silver ion, that is, at least part of the silver be present in an ion-exchange site of the crystalline silicotitanate.

The composition according to this embodiment may include one or more metal elements selected from the group consisting of niobium (Nb), tantalum (Ta), vanadium (V), antimony (Sb), manganese (Mn) and iron (Fe) (hereinafter, these elements are also referred to as "additional metals"), preferably includes one or more metal elements selected from the group consisting of niobium, vanadium, manganese and iron, and more preferably includes niobium.

It is preferable that all or a part of the atoms of the additional metal be replaced with Si atoms included in the crystalline silicotitanate. That is, it is preferable that all or a part of the atoms of the additional metal be included in the crystalline silicotitanate as T atoms.

In the case where the composition according to this embodiment includes the additional metal, the additional metal is preferably niobium in order to further enhance the capability to adsorb cesium and strontium ions readily. It is preferable that the composition according to this embodiment include the additional metal and the molar ratio of the content of the additional metal to the content of titanium included in the crystalline silicotitanate (hereinafter, also referred to as "metal/Ti ratio") be 0 or more and 1.5 or less, 0.01 or more and 1.5 or less, or 0.1 or more and 1.5 or less. When the metal/Ti ratio falls within the above range, the generation of by-product can be limited and the adsorption capability may be further enhanced. The molar ratio of metal/Ti is more preferably 0.01 or more and 1.2 or less, 0.01 or more and 1.0 or less, 0.1 or more and 1.0 or less, 0.3 or more and 1.0 or less or 0.3 or more and 0.8 or less.

The distribution coefficient (hereinafter, also referred to as "Kd") of cesium ions in the composition according to this embodiment is preferably 100,000 mL/g or more, is further preferably 200,000 mL/g or more, and is particularly preferably 1,000,000 mL/g or more. The upper limit for the Kd of cesium ions is not set and may be, for example, 2,000,000 mL/g or less. The Kd of cesium ions is, for example, 100,000 mL/g or more and 2,000,000 mL/g or less, 200,000 mL/g or more and 2,000,000 mL/g or less or 1,000,000 mL/g or more and 2,000,000 mL/g or less.

The Kd of strontium ions in the composition according to this embodiment is preferably 10,000 mL/g or more and is further preferably 20,000 mL/g or more because the property of the composition to adsorb strontium ions is preferably high. The upper limit for the Kd of strontium ions is not set and may be, for example, 2,000,000 mL/g or less. The Kd of strontium ions is, for example, 100,000 mL/g or more and 2,000,000 mL/g or less or 200,000 mL/g or more and 2,000,000 mL/g or less.

The Kd of iodide ions in the composition according to this embodiment is preferably 10,000 mL/g or more and is further preferably 20,000 mL/g or more because the property of the composition to adsorb iodine is preferably high. The upper limit for the Kd of iodide ions is not set and may be, for example, 2,000,000 mL/g or less. The Kd of iodide ions is, for example, 100,000 mL/g or more and 2,000,000 mL/g or less or 200,000 mL/g or more and 2,000,000 mL/g or less.

In this embodiment, Kd is a value that indicates the adsorption property of an adsorbent used for removing a metal ion from an aqueous solution including one or more selected from the group consisting of strontium, cesium and iodide ions (hereinafter, this solution is also referred to as "metal ion-containing aqueous solution") by adsorption. Kd can be calculated using Formula (1) below. Note that the metal ion is a cesium, strontium or iodide ion.

$$Kd = (C_0 - C)/C \times V/m \qquad (1)$$

where

Kd: distribution coefficient [mL/g]
$C_0$: the concentration of the metal ion in the metal ion-containing aqueous solution prior to the adsorption treatment [ppm]
C: the concentration of the metal ion in the aqueous solution at adsorption equilibrium [ppm]
V: the volume of the metal ion-containing aqueous solution [mL]
m: the mass of the adsorbent [g]

The concentrations of the strontium, cesium and iodide ions may be measured using the following method. Specifically, an aqueous solution having the following composition is prepared using NaCl, $MgCl_2$, $CaCl_2$, $Na_2SO_4$, KCl, a Sr standard solution, a Cs standard solution and NaI, which serves as a metal ion-containing aqueous solution including strontium, cesium and iodide ions.

Na: 870 ppm by mass (NaCl origin)
Mg: 118 ppm by mass
Ca: 41 ppm by mass
Na: 126 ppm by mass (Na$_2$SO$_4$ origin)
K: 32 ppm by mass
Na: 1 ppm by mass (NaI origin)
Sr: 1 ppm by mass
Cs: 1 ppm by mass
I: 1 ppm by mass
(note that the total Na concentration is 997 ppm by mass)

Subsequently, 0.05 g of the composition according to this embodiment is added to 1000 mL of the metal ion-containing aqueous solution, and the resulting mixture is stirred at 25°C and 800 rpm for 24 hours or more. Note that the composition has been heated at 100°C for 1 hour in the atmosphere as a pretreatment. Subsequent to stirring, the composition is separated from the metal ion-containing aqueous solution by filtering, and the collected metal ion-containing aqueous solution is diluted 5-fold to form a measurement solution.

The concentrations of strontium, cesium and iodide ions in the measurement solution are determined by ICP emission spectrometry using a common ICP-AES system (e.g., OPTIMA 3000 DV, produced by PERKIN-ELMER), which may be considered as the metal ion concentrations [ppm by mass] in the measurement solution at adsorption equilibrium.

The metal ion-containing aqueous solution may include a reductant including, for example, one or more salts selected from the group consisting of an oxalate salt, a formate salt, an erythorbate salt, an ascorbate salt and a hydrazine salt.

In the composition according to this embodiment, the molar ratio of the silicon content to the content of titanium included in the crystalline silicotitanate (hereinafter, this ratio is also referred to as "Si/Ti ratio ") may be 0.4 or more or 0.8 or more and may be 2.5 or less or 1.5 or less in order to readily enhance the capability to adsorb cesium and strontium ions. The Si/Ti ratio may be 0.4 or more and 2.0 or less, 0.6 or more and 1.5 or less, 0.8 or more and 1.2 or less, 0.8 or more and 1.1 or less or 1.0 or more and 1.2 or less. The lower the Si/Ti ratio, the larger the amount of alkali metals ion-exchangeable with silver and the larger the amounts of strontium, cesium and iodide ions adsorbed. However, if the Si/Ti ratio is excessively low, the possibility of formation of by-products that do not have ion-exchangeability, such as a titanate salt, is increased.

The composition according to this embodiment may include sodium. The molar ratio of the sodium content to the content of titanium included in the crystalline silicotitanate (hereinafter, also referred to as "Na/Ti ratio") may be 0.1 or more or 0.3 or more and may be 1.0 or less, 0.8 or less or 0.6 or less. The Na/Ti ratio is preferably 0.1 or more and 1.0 or less, 0.2 or more and 0.8 or less, 0.4 or more and 0.8 or less or 0.4 or more and 0.7 or less. In the case where the Na/Ti ratio falls within the above range, an increase in the pH of the metal ion-containing aqueous solution which occurs when the composition according to this embodiment is brought into contact with the metal ion-containing aqueous solution can be limited and, consequently, the capability to adsorb strontium and cesium ions can be further enhanced readily.

The composition according to this embodiment can be used as an adsorbent to which one or more selected from the group consisting of strontium, cesium and iodide ions included in a metal ion-containing aqueous solution can be adsorbed and can also be used as a simultaneous adsorbent to which the strontium, cesium and iodide ions can be adsorbed.

The composition according to this embodiment can be used in a method for simultaneously adsorbing cesium, strontium and iodide ions, the method including a step of bringing an adsorbent including the composition into contact with an aqueous solution including cesium, strontium and iodide ions.

Specific examples of the adsorption method include a batch treatment method in which an adsorbent including the composition according to this embodiment is added to a container including a metal ion-containing aqueous solution; and a column method in which the composition according to this embodiment is charged into a column and a metal-containing aqueous solution is passed through the column.

In the above method, the temperature of the metal ion-containing aqueous solution is preferably 0°C or more and 50°C or less, is more preferably 10°C or more and 30°C or less, and is further preferably 20°C or more and 30°C or less.

The metal ion-containing aqueous solution may be any aqueous solution that includes at least cesium, strontium and iodine. The metal ion-containing aqueous solution may include the following metal ions.

Na: 0.01 ppm by mass or more and 20000 ppm by mass or less
Mg: 0.01 ppm by mass or more and 2000 ppm by mass or less
Ca: 0.01 ppm by mass or more and 1000 ppm by mass or less
K: 0.01 ppm by mass or more and 1000 ppm by mass or less
Sr: 0.01 ppm by mass or more and 100 ppm by mass or less
Cs: 0.01 ppm by mass or more and 100 ppm by mass or less
I: 0.01 ppm by mass or more and 100 ppm by mass or less

Examples of the metal ion-containing aqueous solution include seawater and simulated seawater. Seawater including one or more selected from the group consisting of cesium, strontium and iodide ions is preferable. Seawater including cesium, strontium and iodide ions is more preferable.

Normally, iodine is present in an aqueous solution in the form of an iodide ion ($I^-$) and an iodate ion ($IO_3^-$). Among these, an iodate ion is unlikely to adsorb because of weak interaction between an iodate ion and silver. Thus, it is preferable to perform a reduction treatment in order to reduce an iodate ion to an iodide ion.

Therefore, a metal ion-containing aqueous solution including iodine that is partially or completely in the form of iodate ions is preferably subjected to a reduction treatment.

The pH of the metal ion-containing aqueous solution (hereinafter, also referred to as "liquid pH") is preferably 2 or more and 12 or less. The liquid pH is more preferably 5 or more and 10 or less in order to prevent facility corrosion and enhance the capability to adsorb both strontium and cesium ions.

Commonly, the capability of the crystalline silicotitanate to adsorb strontium ions is likely to degrade when the liquid pH is excessively high, while the capability of the crystalline silicotitanate to adsorb cesium ions is likely to degrade when the liquid pH is excessively low.

For reducing an iodate ion to an iodide ion, for example, a reductant may be added to the metal ion-containing aqueous solution. The reductant may be any reductant with which the liquid pH can be adjusted to fall within the above range and an iodate ion can be reduced to an iodide ion. Examples of such a reductant include a reductant including one or more salts selected from the group consisting of an oxalate salt, a formate salt, an erythorbate salt, an ascorbate salt and a hydrazine salt. In order to increase the ease of adjustment of the liquid pH, the reductant is preferably one or more selected from the group consisting of sodium formate, sodium oxalate, erythorbic acid, sodium erythorbate, ascorbic acid and sodium ascorbate and is more preferably erythorbic acid or sodium erythorbate.

A method for producing the composition according to this embodiment is described below.

The composition according to this embodiment can be produced by a production method including a silver support step in which silver is brought into contact with the crystalline silicotitanate.

The silver support step may be conducted by, for example, bringing the crystalline silicotitanate into contact with an aqueous solution including silver (silver-containing aqueous solution) or mixing an insoluble salt, such as silver oxide, with the crystalline silicotitanate.

The silver support step may also be conducted by, for example, subsequent to the production of a powder of crystalline silicotitanate, adding one or more binders selected from the group consisting of clay, silica and alumina to the crystalline silicotitanate in order to form a molded body, such as a cylindrical or spherical molded body or amorphous pieces, and bringing the molded body into contact with a silver-containing aqueous solution.

Alternatively, for example, a method including, subsequent to the production of crystalline silicotitanate, adding an insoluble salt, such as silver oxide, and one or more binders selected from the group consisting of clay, silica and alumina to the crystalline silicotitanate in order to form a molded body, such as a cylindrical or spherical molded body or amorphous pieces, may also be used.

The crystalline silicotitanate used in the silver support step preferably has the following molar composition.

Si/Ti ratio: 0.4 or more and 2.5 or less, 0.6 or more and 1.5 or less, 0.8 or more and 1.2 or less, 0.8 or more and 1.1 or less or 1.0 or more and 1.2 or less
Na/Ti ratio: 0.1 or more and 1.2 or less, 0.2 or more and 1.1 or less, 0.4 or more and 1.0 or less or 0.6 or more and 0.9 or less
Metal/Ti ratio: 0 or more and 1.2 or less, more than 0 and 1.2 or less, 0.01 or more and 1.2 or less, 0.01 or more and 1.0 or less, 0.1 or more and 1.0 or less, 0.3 or more and 1.0 or less or 0.3 or more and 0.8 or less

The crystalline silicotitanate can be produced by, for example, conducting a gelation step in which an inorganic titanium compound, an inorganic silicon compound, water and an alkali metal hydroxide are mixed with one another and a crystallization step in which the resulting gel is crystallized.

In the gelation step, an inorganic titanium compound, an inorganic silicon compound, water and an alkali metal hydroxide are mixed with one another to form a gel, that is, an amorphous silicotitanate gel that serves as a precursor of crystalline silicotitanate.

In the case where crystalline silicotitanate including the additional metal is produced, in the gelation step, a source of the additional metal may be mixed with the inorganic titanium compound, the inorganic silicon compound, water and the alkali metal hydroxide to form an amorphous silicotitanate gel including the additional element, which is subjected to the crystallization step.

Alternatively, in the crystallization step, the amorphous silicotitanate gel may be mixed with the additional-metal source and the resulting mixture may be crystallized to form crystalline silicotitanate substituted with the additional metal.

The additional-metal source used in the gelation or crystallization step may be any compound including the additional metal, and examples thereof include one or more selected from the group consisting of a carboxide, a nitroxide, a sulfoxide, an oxide, a niobate salt, a silicate salt, a titanate salt and a hydroxide. Among these, a hydroxide is preferable. Specific examples of the additional-metal source include one or more selected from the group consisting of niobium hydroxide, niobium silicate, niobium titanate, vanadium hydroxide, manganese hydroxide and iron hydroxide. Among these, niobium hydroxide is preferable.

When the amorphous silicotitanate gel including the additional-metal source is crystallized in the crystallization step, crystallization of the crystalline silicotitanate occurs while silicon is replaced with the additional metal. As a result, a part or all of the atoms of the additional metal become T atoms, and crystalline silicotitanate substituted with the additional metal can be formed.

The method for producing crystalline silicotitanate may include a cleaning step in which the above crystalline silicotitanate is cleaned. The cleaning method is not limited, and examples thereof include a method in which the crystalline silicotitanate is brought into contact with warm pure water or a dilute aqueous solution of hydrochloric acid having a concentration of 0.05 mol/L or more and 0.5 mol/L or less. Note that, in order to prevent elution of silver, the crystalline silicotitanate subjected to the cleaning step is preferably crystalline silicotitanate that has not been subjected to the silver support step.

A composition produced by the production method according to this embodiment can be directly used as an adsorbent to which one or more selected from the group consisting of strontium, cesium and iodide ions included in a metal ion-containing aqueous solution can be adsorbed and also as a simultaneous adsorbent to which the strontium, cesium and iodide ions can be adsorbed.

The composition according to this embodiment may be used in the form of a powder. Alternatively, the composition according to this embodiment may be used in the form of a molded body, which is produced by mixing the composition with a binder or the like, kneading the resulting mixture, and forming the kneaded mixture into a cylindrical or spherical shape using extrusion molding or an agitating granulator.

In the case where the composition according to this embodiment is formed into a molded body, the production method preferably includes a step of forming the composition into shape (hereinafter, also referred to as " forming step ").

In the forming step, the composition according to this embodiment is formed into an intended shape. The forming method used in the forming step may be any forming method with which a molded body having an intended shape can be formed, and examples thereof include one or more selected from the group consisting of tumbling granulation, press forming, extrusion molding, injection molding, casting and sheet forming.

In the forming step, a composition that includes the composition according to this embodiment and a binder may be formed into shape. The binder may be any of the binders known in the related art as a binder for zeolite, and examples thereof include one or more selected from the group consisting of silica, alumina and clay. Examples of the clay include one or more selected from the group consisting of kaolin, attapulgite, montmorillonite, bentonite, allophane and sepiolite. The binder is, for example, preferably silica and is particularly preferably a silica sol.

In the same manner as described above, the molded body including the composition according to this embodiment can be used as an adsorbent to which one or more ions selected from the group consisting of strontium, cesium and iodide ions included in a metal ion-containing aqueous solution can be adsorbed and also as an adsorbent to which strontium, cesium and iodide ions can be adsorbed.

EXAMPLES

The present disclosure is described further specifically with reference to Examples below. Note that the present disclosure is not limited by Examples below.

<Composition Analysis>

A measurement sample was dissolved in an aqueous mixed solution of hydrofluoric acid and nitric acid by high-pressure acid dissolution to prepare a sample solution. The sample solution was subjected to ICP emission spectrometry (ICP-AES) using an ICP-AES system (name: OPTIMA 3000 DV, produced by PERKIN-ELMER) in order to determine the contents of titanium, silicon, silver, sodium and niobium. The Si/Ti, Ag/Ti, Na/Ti and Nb/Ti ratios of the sample were calculated from the contents of titanium, silicon, silver, sodium and niobium.

<Batch Evaluation 1: Evaluation of Properties of Adsorbing Strontium, Cesium and Iodide Ions>

The concentrations of strontium, cesium and iodide ions were measured using the following method. Specifically, an aqueous solution having the following composition was prepared using NaCl, MgCl$_2$, CaCl$_2$, Na$_2$SO$_4$, KCl, a Sr standard solution, a Cs standard solution and sodium iodide (NaI), which was used as a metal ion-containing aqueous solution (pH: 7.0 $\pm$ 1.0) including strontium, cesium and iodide ions.
Na: 870 ppm by mass (NaCl origin)
Mg: 118 ppm by mass
Ca: 41 ppm by mass
Na: 126 ppm by mass (Na$_2$SO$_4$ origin)
K: 32 ppm by mass
Na: 1 ppm by mass (NaI origin)
Sr: 1 ppm by mass
Cs: 1 ppm by mass
I: 1 ppm by mass
(note that the total Na concentration was 997 ppm by mass)
Subsequently, 0.05 g of the measurement sample was added to 1000 mL of the metal ion-containing aqueous solution, and the resulting mixture was stirred at 25°C and 800 rpm for 24 hours or more. Note that the measurement sample had been heated at 100°C for 1 hour in the atmosphere as a pretreatment. Subsequent to stirring, the composition was separated from the measurement solution by filtering, and the collected simulated seawater was diluted 5-fold to form a measurement solution.

The concentrations of strontium, cesium and iodide ions in the measurement solution were determined by ICP emission spectrometry using an ICP-AES system (name: OPTIMA 3000 DV, produced by PERKIN-ELMER), which were considered as the metal ion concentrations [ppm] in the measurement solution at adsorption equilibrium.
The Kd of each of the metal ions was calculated from the concentration of the metal ion using Formula (1) below. Note that the metal ion is a cesium, strontium or iodide ion.

$$Kd = (C_0 - C)/C \times V/m \qquad (1)$$

where

Kd: distribution coefficient [mL/g]
$C_0$: the concentration of the metal ion in the metal ion-containing aqueous solution prior to the adsorption treatment [ppm]
C: the concentration of the metal ion in the aqueous solution at adsorption equilibrium [ppm]
V: the volume of the metal ion-containing aqueous solution [1000 mL]
m: the mass of the adsorbent [0.05 g]

<Batch Evaluation 2: Evaluation of Properties of Adsorbing Strontium, Cesium and Iodide Ions>

Batch Evaluation 2 was conducted as in Batch Evaluation 1, except that sodium iodide (NaI) used in the preparation of the metal ion-containing aqueous solution was changed to sodium iodate (NaIO$_3$) and an amount of erythorbic acid, ascorbic acid or sodium erythorbate which was three times the amount of sodium iodate by mole was added to the aqueous solution, which was stirred at room temperature for 3 hours to form a metal ion-containing aqueous solution.
The pH of the metal ion-containing aqueous solution was 5.1 $\pm$ 1.0.

<Column Flow Evaluation: Evaluation of Properties of Adsorbing Strontium, Cesium and Iodide Ions>

4.5 ml of the measurement sample was charged into a glass column having an inside diameter of 0.8 cm and a length of 20 cm. The metal ion-containing aqueous solution having a temperature of 25°C was passed through the column at a flow rate of 45 ml/hour in an up-flow manner.

The concentrations of strontium, cesium and iodide ions in the metal ion-containing aqueous solution that had been passed through the column were measured by ICP emission spectrometry using the same method as described above. The breakthrough curves of strontium, cesium and iodide ions were determined.

The unit "BV" of the horizontal axis of the breakthrough curves is an abbreviation for "bed volume", which represents the ratio of the volume of the liquid passed through the column relative to the volumetric capacity of the space filled with the adsorbent.

<XRD Measurement>

The X-ray diffraction pattern of the sample was measured using an X-ray diffraction system (product name: "Ultima IV" produced by Rigaku Corporation). The measurement was conducted under the following conditions.

Radiation source: CuKa radiation (wavelength $\lambda$: 1.5405 Å)
Scanning conditions: 0.1° per second
Divergence slit: 1.00 deg
Scatter slit: 1.00 deg
Receiving slit: 0.30 mm
Measurement range: $2\theta$ = 5.0° to 60.0°

Example 1

20 g of sodium silicate (No. 3, $SiO_2$: 29.1% by mass), 71 g of an aqueous solution of titanium oxysulfate ($TiOSO_4$: 8.2% by mass), 63 g of sodium hydroxide (NaOH: 48% by mass) and 41 g of pure water were mixed with one another. The resulting mixture was filtered and cleaned to form an amorphous silicotitanate gel having the following molar composition. Note that "$H_2O$/Ti ratio" is the molar ratio of $H_2O$ to Ti.

Si/Ti ratio: 1.37
Na/Ti ratio: 3.3
$H_2O$/Ti ratio: 11

To 8.3 g of the amorphous silicotitanate gel, 5.5 g of a niobium hydroxide (Nb(OH)s) powder, 40 g of pure water and, as a seed crystal, an amount of crystalline silicotitanate having a sitinakite structure which was 1% by mass of the amount of the amorphous silicotitanate gel were added. The resulting mixture was stirred to form a slurry-like niobium (Nb)-containing amorphous silicotitanate gel having the following molar composition.

Si/Ti ratio: 1.37
Na/Ti ratio: 3.3
Nb/Ti ratio: 1.0
$H_2O$/Ti ratio: 82

The slurry-like Nb-containing amorphous silicotitanate gel was charged into a stainless steel autoclave (product name: "KH-02" produced by HIRO COMPANY) having an inner capacity of 80 cc and then heated at 180°C for 72 hours in order to crystallize the Nb-containing amorphous silicotitanate gel. Hereby, crystalline silicotitanate (Nb-substituted crystalline silicotitanate) was synthesized.

The Nb-substituted crystalline silicotitanate was cleaned with an amount of pure water which was 10 times the amount of the Nb-substituted crystalline silicotitanate by mass, an amount of 0.15 mol/L aqueous solution of hydrochloric acid which was 10 times the amount of the Nb-substituted crystalline silicotitanate by mass and an amount of pure water which was 10 times the amount of the Nb-substituted crystalline silicotitanate by mass in this order. Then, the Nb-substituted crystalline silicotitanate was collected. Subsequently, the Nb-substituted crystalline silicotitanate was dried at 90°C for 16 hours in an air atmosphere. The dried Nb-substituted crystalline silicotitanate had the following molar composition.

Si/Ti ratio: 0.97
Na/Ti ratio: 0.79

Nb/Ti ratio: 0.68

With 200 ml of an aqueous solution in which 1.8 g of silver nitrate (special grade reagent) was dissolved, 10 g of the Nb-substituted crystalline silicotitanate was mixed, and the resulting mixture was stirred at room temperature and 40 rpm for 20 hours. The silver content in the aqueous solution was 11.3% by mass of the amount of Nb-substituted crystalline silicotitanate.

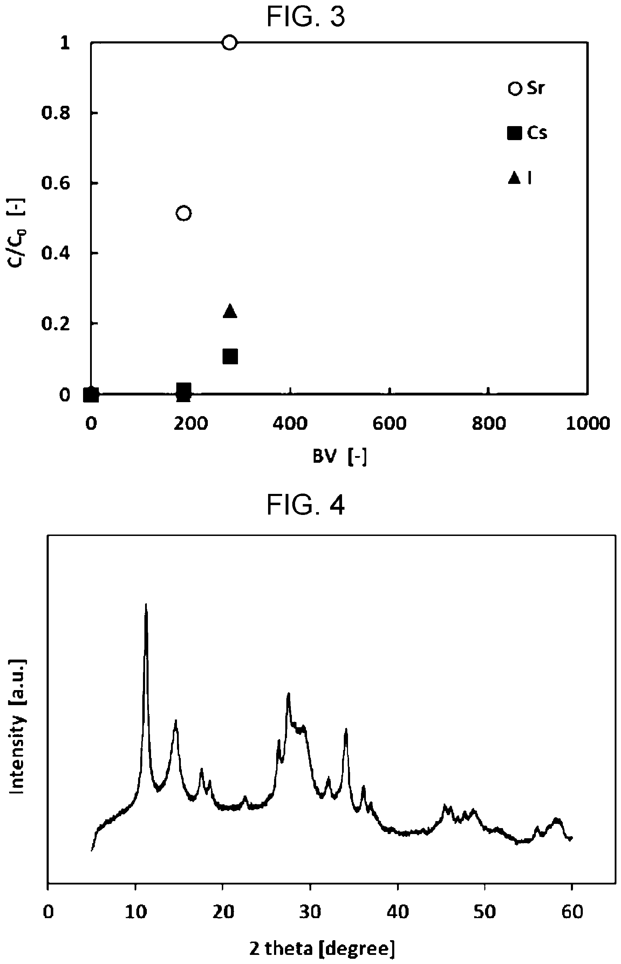

The aqueous solution was filtered and cleaned. Subsequenlty, the collected solid component was dried at 90°C for 16 hours in an air atmosphere. Hereby, a composition including silver and Nb-substituted crystalline silicotitanate was prepared as a composition of Example 1. It was confirmed that, on the basis of the XRD pattern, the composition was a silver-containing, Nb-substituted crystalline silicotitanate having a sitinakite structure. Fig. 4 illustrates the XRD pattern. Since XRD peaks of silver and a silver compound were not confirmed, it is considered that silver was included in the composition prepared in Example 1 in the form of silver ions.

The silver content in the composition prepared in Example 1 was 9.2% by mass. The composition prepared in Example 1 had the following molar composition.

Si/Ti ratio: 0.97
Na/Ti ratio: 0.49
Nb/Ti ratio: 0.66
Ag/Ti ratio: 0.21

Example 2

A composition that included silver and crystalline silicotitanate was prepared as a composition of Example 2 as in Example 1, except that an aqueous solution in which 1.0 g of silver nitrate was dissolved was used. It was confirmed that, on the basis of the XRD pattern, the composition was a silver-containing, Nb-substituted crystalline silicotitanate having a sitinakite structure. Since XRD peaks of silver and a silver compound were not confirmed, it is considered that silver was included in the composition prepared in Example 2 in the form of silver ions.

The silver content in the composition prepared in Example 2 was 4.7% by mass. The composition prepared in Example 2 had the following molar composition.

Si/Ti ratio: 0.97
Na/Ti ratio: 0.55
Nb/Ti ratio: 0.66
Ag/Ti ratio: 0.11

The composition prepared in Example 2 had a higher Na/Ti ratio and a lower Ag/Ti ratio than that prepared in Example 1. Sodium was included in a portion of the crystalline silicotitanate included in the composition prepared in Example 2 (specifically, the crystalline silicotitanate prepared in Example 2) which was other than the skeleton, that is, in particular, pores, in the form of ions. It is considered that, therefore, the crystalline silicotitanate included in the composition prepared in Example 2 includes silver and the silver is included in a portion of the crystalline silicotitanate which is other than the skeleton in the form of silver ions.

Example 3

22 g of sodium silicate (No. 3, $SiO_2$: 29.1% by mass), 71 g of a sulfuric acid aqueous solution of titanium oxysulfate ($TiOSO_4$: 8.2% by mass), 63 g of sodium hydroxide (NaOH: 48% by mass) and 41 g of pure water were mixed with one another. The resulting mixture was filtered and cleaned to form an amorphous silicotitanate gel having the following molar composition.

Si/Ti ratio: 1.49
Na/Ti ratio: 3.3
$H_2O$/Ti ratio: 12

Nb-substituted crystalline silicotitanate having the following molar composition was prepared as in Example 1, except that 1.8 g of niobium hydroxide (Nb(OH)s) powder was mixed with the above amorphous silicotitanate gel.

Si/Ti ratio: 1.08
Na/Ti ratio: 0.81
Nb/Ti ratio: 0.33

A composition that included silver and crystalline silicotitanate was prepared as a composition of Example 3 as in Example 1, except that 0.15 g of silver nitrate was mixed with the above Nb-substituted crystalline silicotitanate. It was confirmed that, on the basis of the XRD pattern, the composition was a silver-containing, Nb-substituted crystalline silicotitanate having a sitinakite structure. Since XRD peaks of silver and a silver compound were not confirmed, it is considered that silver was included in the composition prepared in Example 3 in the form of silver ions.
The silver content in the composition prepared in Example 3 was 0.7% by mass. The composition prepared in Example 3 had the following molar composition.
Si/Ti ratio: 1.08
Na/Ti ratio: 0.70
Nb/Ti ratio: 0.32
Ag/Ti ratio: 0.02

Example 4

A composition that included silver and crystalline silicotitanate was prepared as a composition of Example 4 as in Example 3, except that an aqueous solution in which 0.1 g of silver nitrate was dissolved was used. It was confirmed that, on the basis of the XRD pattern, the composition was a silver-containing, Nb-substituted crystalline silicotitanate having a sitinakite structure. Since XRD peaks of silver and a silver compound were not confirmed, it is considered that silver was included in the composition prepared in Example 4 in the form of silver ions.
The silver content in the composition prepared in Example 4 was 0.4% by mass. The composition prepared in Example 4 had the following molar composition.
Si/Ti ratio: 1.08
Na/Ti ratio: 0.75
Nb/Ti ratio: 0.32
Ag/Ti ratio: 0.01

Example 5

A composition that included silver and crystalline silicotitanate was prepared as a composition of Example 5 as in Example 1, except that 0.5 g of silver nitrate was mixed with Nb-containing crystalline silicotitanate. It was confirmed that, on the basis of the XRD pattern, the composition was a silver-containing, Nb-substituted crystalline silicotitanate having a sitinakite structure. Since XRD peaks of silver and a silver compound were not confirmed, it is considered that silver was included in the composition prepared in Example 5 in the form of silver ions.
The silver content in the composition prepared in Example 5 was 2.3% by mass. The composition prepared in Example 5 had the following molar composition.
Si/Ti ratio: 0.97
Na/Ti ratio: 0.61
Nb/Ti ratio: 0.65
Ag/Ti ratio: 0.05

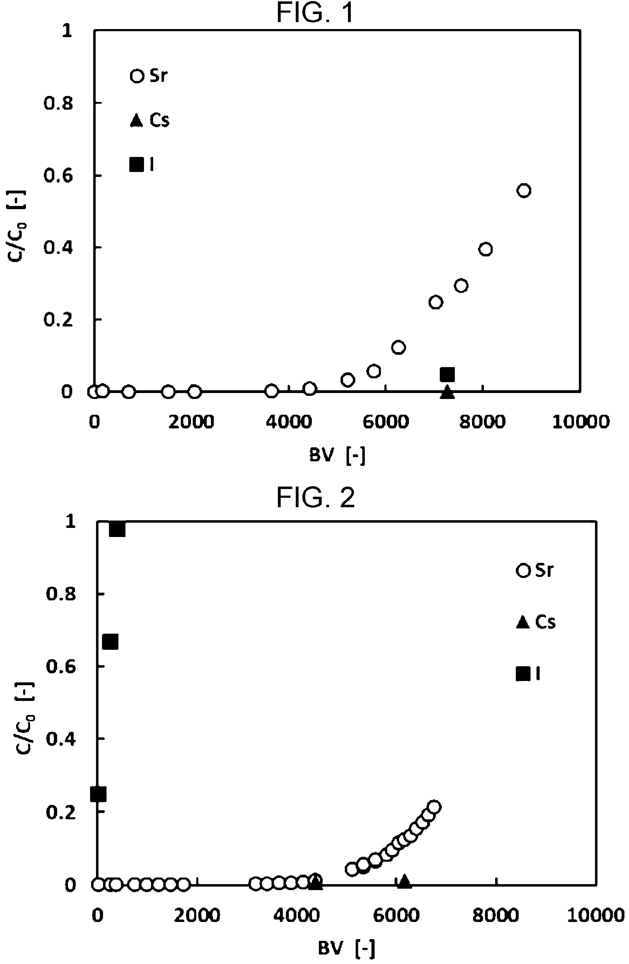

Subsequently, 100 g of the composition was mixed with 33 g of a silica sol ($SiO_2$: 30% by mass, aqueous solution) used as a binder and 40 g of pure water. The resulting mixture was extrusion-molded into shape and drying was subsequently performed. Hereby, a dry cylindrical molded body was prepared.
A column flow evaluation was conducted using the molded body. Fig. 1 illustrates the breakthrough curves of strontium, cesium and iodide ions.

Comparative Example 1

The Nb-substituted crystalline silicotitanate prepared in Example 1 (i.e., silver content: 0% by mass) was directly used as a composition of Comparative Example 1.

100 g of the composition of Comparative Example 1 was mixed with 33 g of a silica sol ($SiO_2$: 30% by mass, aqueous solution) used as a binder and 40 g of pure water. The resulting mixture was extrusion-molded into shape and drying was subsequently performed. Hereby, a dry cylindrical molded body was prepared. A column flow evaluation was conducted. Fig. 2 illustrates the breakthrough curves of strontium, cesium and iodide ions.

Comparative Example 2

A silver-containing zeolite composition was prepared as a composition of Comparative Example 2 as in Example 1, except that an aqueous solution in which 0.2 g of silver nitrate was dissolved was used and 1.0 g of high-silica zeolite (product name: HSZ (registered trademark)-640, produced by Tosoh Corporation, $SiO_2/Al_2O_3$ molar ratio: 18) was used instead of Nb-substituted crystalline silicotitanate.

100 g of the composition of Comparative Example 2 was mixed with 33 g of a silica sol used as a binder and 55 g of pure water. The resulting mixture was extrusion-molded into shape and drying was subsequently performed. Hereby, a dry cylindrical molded body was prepared. A column flow evaluation was conducted. Fig. 3 illustrates the breakthrough curves of strontium, cesium and iodide ions.

Comparative Example 3

The composition of Example 2 was sintered at 600°C for 1 hour in the stream of air in order to make the crystalline silicotitanate included in the composition amorphous. The resulting composition including amorphous silicotitanate and silver oxide was used as a composition of Comparative Example 3.

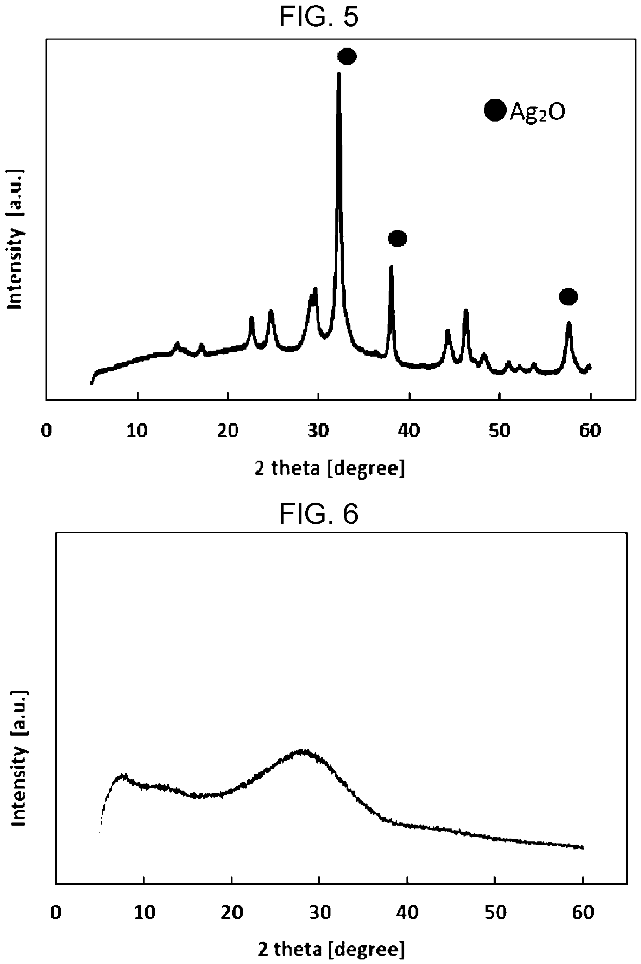

Fig. 5 illustrates the XRD pattern of the composition prepared in Comparative Example 3. As is clear from Fig. 5, the XRD peak of crystalline silicotitanate was not confirmed, and it was confirmed that the composition included an amorphous substance, a decomposition product of silicotitanate and silver oxide. This confirms that, in the composition prepared in Comparative Example 3, at least silicotitanate became amorphous.

Comparative Example 4

The slurry-like, Nb-containing amorphous silicotitanate gel prepared in Example 1 was filtered and dried at 110°C for 16 hours in an air atmosphere. Hereby, Nb-containing amorphous silicotitanate was prepared. The Nb-containing amorphous silicotitanate was brought into contact with an aqueous solution of silver nitrate in order to prepare a composition including silver and Nb-containing amorphous silicotitanate as a composition of Comparative Example 4. The XRD pattern of the composition confirmed that the composition was amorphous silicotitanate including silver and Nb. Fig. 6 illustrates the XRD pattern. Since XRD peaks of silver and a silver compound were not confirmed, it is considered that silver is included in the composition prepared in Comparative Example 4 in the form of silver ions.

Table 1 lists the metal proportions (molar proportions) and silver content in each of the compositions prepared in Examples and Comparative Examples. Table 2 lists the results of evaluations of properties of adsorbing strontium, cesium and iodide ions which were made in Batch Evaluation 1.

[Table 1]

| | Composition | Si/Ti ratio | Na/Ti ratio | Nb/Ti ratio | Ag/Ti ratio | Ag content [mass%] |
|---|---|---|---|---|---|---|
| Example 1 | Silver-containing, Nb-substituted crystalline silicotitanate | 0.97 | 0.49 | 0.66 | 0.21 | 9.2 |
| Example 2 | Silver-containing, Nb-substituted crystalline silicotitanate | 0.97 | 0.55 | 0.66 | 0.11 | 4.7 |
| Example 3 | Silver-containing, Nb-substituted crystalline silicotitanate | 1.08 | 0.70 | 0.32 | 0.02 | 0.7 |
| Example 4 | Silver-containing, Nb-substituted crystalline silicotitanate | 1.08 | 0.75 | 0.32 | 0.01 | 0.4 |

(continued)

| | Composition | Si/Ti ratio | Na/Ti ratio | Nb/Ti ratio | Ag/Ti ratio | Ag content [mass%] |
|---|---|---|---|---|---|---|
| Example 5 | Silver-containing, Nb-substituted crystalline silicotitanate | 0.97 | 0.61 | 0.65 | 0.05 | 2.3 |
| Comparative Example 1 | Nb-substituted crystalline silicotitanate | 0.97 | 0.79 | 0.68 | 0 | 0 |
| Comparative Example 2 | Silver-containing zeolite | - | - | - | - | 3.1 |
| Comparative Example 3 | Amorphous silicotitanate + silver oxide | 0.97 | 0.55 | 0.66 | 0.11 | 4.7 |
| Comparative Example 4 | Amorphous silicotitanate containing Silver and Nb | 1.37 | 3.30 | 1.00 | 0.03 | 1.7 |

[Table 2]

| | Liquid pH | Sr-Kd [ml/g] | Cs-Kd [ml/g] | I-Kd [ml/g] |
|---|---|---|---|---|
| Example 1 | 7.3 | 32770 | 2305581 | 80000 |
| Example 2 | 6.8 | 33191 | 1518462 | 180000 |
| Example 3 | 7.0 | 38651 | 1980000 | 15088 |
| Example 4 | 7.1 | 46667 | 1798181 | 10769 |
| Example 5 | 7.3 | 43694 | 586061 | 405532 |
| Comparative Example 1 | 7.2 | 47568 | 2757778 | 2222 |
| Comparative Example 2 | 7.1 | 0 | 1978 | 12258 |
| Comparative Example 3 | 6.8 | 725 | 202 | 204719 |
| Comparative Example 4 | 7.1 | 1763 | 101 | 133846 |

The results listed in Table 2 and illustrated in Figs. 1 to 3 confirm that the compositions prepared in Examples, which included silver and crystalline silicotitanate, were capable of simultaneous adsorption of strontium, cesium and iodide ions. The composition prepared in Comparative Example 1, which did not include silver, hardly adsorbed iodide ions. The composition prepared in Comparative Example 2, which was a composition that did not include crystalline silicotitanate and included silver and zeolite, hardly adsorbed strontium and cesium ions. The compositions prepared in Comparative Examples 3 and 4, which were amorphous silicotitanate, hardly adsorbed strontium and cesium ions.

The compositions prepared in Examples 1 and 5 were evaluated in terms of the property of adsorbing strontium, cesium and iodide ions by Batch Evaluation 2. Table 3 lists the results.

[Table 3]

| | Reductant | Liquid pH | Sr-Kd [ml/g] | Cs-Kd [ml/g] | I-Kd [ml/g] |
|---|---|---|---|---|---|
| Example 1 | Erythorbic acid | 4.7 | 31282 | 535555 | 133846 |
| Example 1 | Ascorbic acid | 4.4 | 37143 | 424444 | 161818 |
| Example 5 | Sodium erythorbate | 5.4 | 24444 | 456191 | 66957 |

The results listed in Table 3 confirm that the compositions prepared in Examples were capable of simultaneous adsorption of cesium, strontium and iodide ions from a metal ion-containing aqueous solution including a reductant and having a liquid pH of $5.1 \pm 1.0$.

INDUSTRIAL APPLICABILITY

The composition according to the present disclosure is capable of an efficient treatment of hazardous ions included in seawater, groundwater and polluted water, such as cesium, strontium and iodide ions. Furthermore, since the composition is capable of removing iodine while cesium and strontium are removed, the amount of the adsorbent used or disposed can be reduced.

All the contents of the description, claims, and abstract in Japanese Patent Application No. 2021-199157 filed on December 8th, 2021, are cited by reference herein and incorporated as disclosure of the description of the present disclosure.

## Claims

1. A composition comprising silver and crystalline silicotitanate.

2. The composition according to claim 1, wherein the crystalline silicotitanate has a sitinakite structure.

3. The composition according to claim 1 or 2, wherein a content of the silver is 0.3% by mass or more and 20% by mass or less.

4. The composition according to claim 1 or 2, wherein at least part of the silver is present in an ion-exchange site of the crystalline silicotitanate.

5. The composition according to claim 1 or 2, comprising one or more metal elements selected from the group consisting of niobium, tantalum, vanadium, antimony, manganese and iron.

6. The composition according to claim 5, wherein the metal elements include niobium.

7. The composition according to claim 5, wherein a molar ratio of a content of the metal elements to a content of titanium included in the composition is 0.01 or more and 1.2 or less.

8. The composition according to claim 1 or 2, wherein a distribution coefficient of iodine is 10,000 mL/g or more, the distribution coefficient of iodine being represented by Formula (1) below.

$$Kd = (C_0 - C)/C \times V/m \qquad (1)$$

where

Kd: a distribution coefficient of iodine (mL/g),
$C_0 = 1$: a concentration of a metal ion in an aqueous solution containing iodine prior to an adsorption treatment (ppm),
C: a concentration of the metal ion in the aqueous solution containing iodine at adsorption equilibrium (ppm),
$V = 1000$: a volume of the aqueous solution containing iodine (mL),
$m = 0.05$: a mass of an adsorbent (g)

9. A method for producing the composition according to claim 1 or 2, the method comprising bringing crystalline silicotitanate into contact with an aqueous solution containing silver.

10. A molded body comprising the composition according to claim 1 or 2.

11. An adsorbent for cesium, strontium and iodide ions, the adsorbent comprising the composition according to claim 1 or 2.

12. An adsorbent for one or more selected from the group consisting of cesium, strontium and iodide ions, the adsorbent comprising the composition according to claim 1 or 2.

13. A method for adsorbing cesium, strontium and iodide ions, the method comprising bringing the adsorbent according to claim 11 into contact with an aqueous solution containing cesium, strontium and iodide ions.

14. The method for adsorbing cesium, strontium and iodide ions according to claim 13, wherein the aqueous solution has a pH of 2 or more and 12 or less.

15. The method for adsorbing cesium, strontium and iodide ions according to claim 13, the method comprising a step of performing a reduction treatment of the aqueous solution.

16. The method for adsorbing cesium, strontium and iodide ions according to claim 15, wherein a reductant used in the reduction treatment includes one or more selected from the group consisting of an oxalate salt, a formate salt, an erythorbate salt, an ascorbate salt and a hydrazine salt.

## FIG. 1

## FIG. 2

## FIG. 3

## FIG. 4

## FIG. 5

## FIG. 6

## INTERNATIONAL SEARCH REPORT

| International application No. |
|---|
| **PCT/JP2022/044835** |

### A. CLASSIFICATION OF SUBJECT MATTER

*G21F 9/12*(2006.01)i
FI:   G21F9/12 501B; G21F9/12 501D

According to International Patent Classification (IPC) or to both national classification and IPC

### B. FIELDS SEARCHED

Minimum documentation searched (classification system followed by classification symbols)

G21F9/00-9/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JONATHON, Fitzsimmons et al. The application of poorly crystalline silicotitanate in production of 225Ac. nature. 14 August 2019, scientificreports 9: 11808(2019) p. 1, line 13 to p. 2, line 30, fig. 2 | 1-12 |
| A | entire text, all drawings | 13-16 |
| A | JP 2021-32652 A (EBARA CORP) 01 March 2021 (2021-03-01) entire text, all drawings | 1-16 |
| A | JP 2016-210673 A (TOSOH CORP) 15 December 2016 (2016-12-15) entire text, all drawings | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 December 2022** | **17 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/044835**

| Patent document cited in search report | | | Publication date (day/month/year) | Patent family member(s) | | | Publication date (day/month/year) |
|---|---|---|---|---|---|---|---|
| JP | 2021-32652 | A | 01 March 2021 | (Family: none) | | | |
| JP | 2016-210673 | A | 15 December 2016 | US | 2017/0165634 | A1 | |
| | | | | entire text, all drawings | | | |
| | | | | CN | 106573787 | A | |
| | | | | entire text, all drawings | | | |
| | | | | KR | 10-2017-0032435 | A | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6110378 A
- JP 4919528 B
- JP 2013088391 A
- JP 6645203 B
- JP 2021199157 A

**Non-patent literature cited in the description**

- *American Mineralogist Crystal Structure Database,* 11 November 2021, http://ruff.geo.arizona.edu./AMS/amcsd.php